Europäisches Patentamt

European Patent Office

Office européen des brevets

(19)

(11) **EP 1 696 549 A1**

(12) **DEMANDE DE BREVET EUROPEEN**

(43) Date de publication:
   **30.08.2006 Bulletin 2006/35**

(51) Int Cl.:
   *H02M 7/48* (2006.01)

(21) Numéro de dépôt: **06354005.8**

(22) Date de dépôt: **16.02.2006**

(84) Etats contractants désignés:
   **AT BE BG CH CY CZ DE DK EE ES FI FR GB GR HU IE IS IT LI LT LU LV MC NL PL PT RO SE SI SK TR**
   Etats d'extension désignés:
   **AL BA HR MK YU**

(30) Priorité: **24.02.2005 FR 0501888**

(71) Demandeur: **SCHNEIDER ELECTRIC INDUSTRIES SAS**
   **92500 Rueil-Malmaison (FR)**

(72) Inventeurs:
   • **Baudesson, Philippe,**
    **Schneider Electric**
    **38050 Grenoble Cedex 09 (FR)**

   • **Delarue, Philippe,**
    **Schneider Electric**
    **38050 Grenoble Cedex 09 (FR)**
   • **Le Moigne, Philippe,**
    **Schneider Electric**
    **38050 Grenoble Cedex 09 (FR)**
   • **Bartholomeus, Patrick,**
    **Schneider Electric**
    **38050 Grenoble Cedex 09 (FR)**
   • **Cimetière, Xavier,**
    **Schneider Electric**
    **38050 Grenoble Cedex 09 (FR)**

(74) Mandataire: **Tripodi, Paul et al**
   **Schneider Electric Industries SAS,**
   **Service Propriété Industrielle - E1**
   **38050 Grenoble Cédex 09 (FR)**

(54) **Dispositif et procédé de commande d'un convertisseur et convertisseur électrique comportant un tel dispositif**

(57)   Le dispositif de commande d'un convertisseur d'énergie électrique comporte un dispositif de contrôle (6) de la conduction de bras de semi-conducteurs. Le convertisseur comporte des lignes d'alimentation (L1, L2, L0) de tensions continue (V1, V2, V0) à trois niveaux avec deux condensateurs de filtrage (C1, C2). Le dispositif de contrôle fournit des signaux de modulation de signaux de commande desdits bras. Le dispositif de contrôle (6) comporte un circuit de régulation (20) pour réguler la variation de tension de tension intermédiaire ($\Delta$V0) à travers une composante générale de commande (CG). La composante générale de commande (CG) est déterminée en fonction de signaux de modulation, de signaux représentatifs de tension continue et des signaux représentatifs de courants (1123) pour participer à la régulation de la tension intermédiaire ($\Delta$V0). Le procédé traite la régulation de variation de tension de travers la composante générale de commande (CG).

**FIG. 8**

EP 1 696 549 A1

**Description**

## DOMAINE TECHNIQUE

L'invention concerne un dispositif de commande d'un convertisseur d'énergie électrique comportant des moyens de contrôle de la conduction de bras de semi-conducteurs de puissance,
ledit convertisseur d'énergie électrique comportant :

- une alimentation continue comportant une première ligne de tension positive une seconde ligne de tension négative, et une troisième ligne de tension intermédiaire reliée à un point commun de condensateurs de filtrage connectés à la dite première ligne et à ladite seconde ligne,
- des moyens de conversion ayant au moins trois bras connectés entre lesdites lignes de tension positive, négative ou intermédiaire et des sorties pour fournir au moins une tension de sortie,
- des moyens de contrôle contrôlant la conduction desdits bras des moyens de conversion, lesdits moyens de contrôle comportant des moyens de traitement pour fournir des signaux de modulation de signaux de commande desdits bras,

L'invention concerne aussi un convertisseur électrique comportant un tel dispositif de contrôle.
L'invention concerne aussi un procédé de commande d'un tel convertisseur.

## ETAT DE LA TECHNIQUE

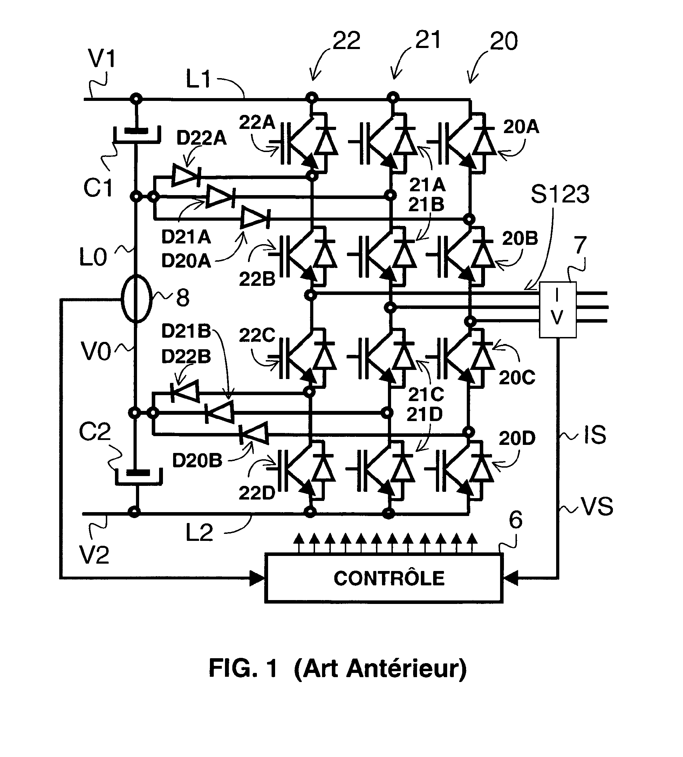

Les dispositifs de commande de convertisseurs connus commandent des bras de commutation à semi-conducteurs de puissance pour fournir des tensions sortie alimentant une charge. Lorsque les convertisseurs sont du type à trois niveaux comme celui représenté sur la figure 1, des bras du convertisseur sont connectés entre une ligne L1 de tension positive V1, une ligne L2 de tension négative V2 et une ligne L0 de tension intermédiaire V0, et des sorties O123. La ligne de tension intermédiaire L0 est connectée à un point commun de deux condensateurs C1 et C2 de filtrage de tension continue connectés en série entre la ligne L1 et la ligne L2. Sur le schéma de la figure 1, un premier bras 20 comporte des semi-conducteurs 20A, 20B, 20C, 20D connectés respectivement entre la ligne L1 de tension positive V1 et un premier point commun recevant la tension intermédiaire V0 à travers une première diode D20A, entre le premier point commun et une première sortie S 123, entre la première sortie et un second point commun recevant la tension intermédiaire V0 à travers une seconde diode D20B connectée en sens inverse de la diode D20A, entre le second point commun et la ligne L2 de tension négative V2. Les autres bras 21 et 22 sont connectés de la même manière, ils comportent respectivement des semi-conducteurs 21A, 21 B, 21C, 21D et 22A, 22B, 22C, 22D, des premières diodes D2 1 A et D22A, des secondes diodes D2 1 B et D21B. Un circuit de contrôle 6 commande la conduction ou le blocage des semi-conducteurs des bras pour fournir en sortie S 123 des tensions d'alimentation de charges ou de réseau électrique. Des moyens de mesures 7 fournissent des signaux de mesure IS et VS représentatifs de grandeurs électriques de sortie par exemple des signaux de courant et/ou de tension. Si la tension du point milieu est contrôlée aussi par le circuit de contrôle, des moyens de mesure 8 fournissent des valeurs de la dite tension ou du courant circulant dans le pont de condensateurs C1 et C2. Puisque le convertisseur est à trois niveaux, les semi-conducteurs sont commandés par demi-bras. Par exemple, des couples de demi-bras 20A-20B, 21A-21B, et 22A-22B fournissent une tension positive ou intermédiaire et des couples de demi-bras 20C-20D, 21C-21D, et 22C-22D fournissent une tension négative ou intermédiaire.
Dans un circuit de contrôle 6 de l'art antérieur une première voie contrôle des demi-bras du coté des tensions positives et une seconde voie contrôle des demi-bras du coté tensions négatives.

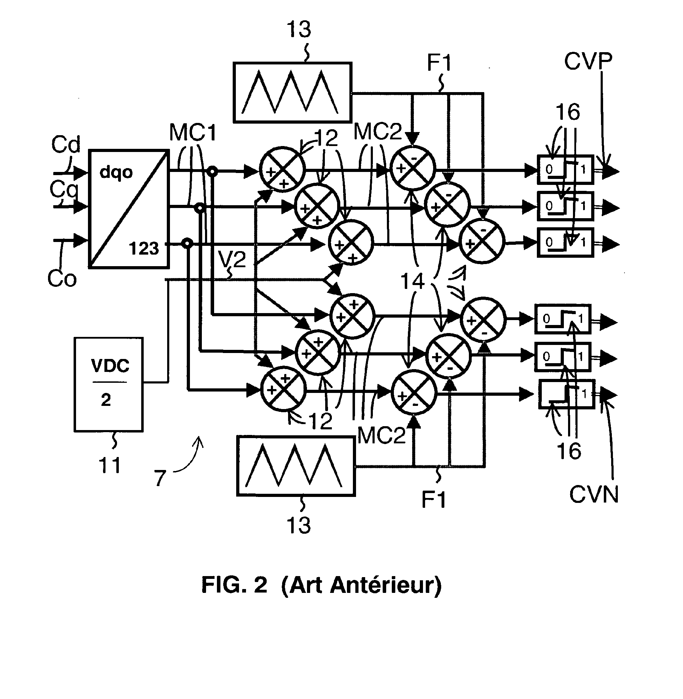

La figure 2 montre un exemple d'une partie d'une unité de traitement 7 d'un circuit de contrôle 6 pour fournir des signaux de commande des bras. Dans ce circuit, un régulateur 8 permet de réguler et de fournir des signaux de modulation triphasés en fonction de consignes réduites Cd, Cq, Co, notamment par une transformation de Park ou Concordia dans les domaines dqo ou $\alpha\beta$o. Ces transformations et rotations connues sont calculées généralement à l'aide de matrices dites respectivement de Park et de Concordia. Des signaux MC1 pour chaque phase en sortie du régulateur sont de préférence utilisés pour une modulation de type intersective sur un signal triangulaire de porteuse haute fréquence permettant une modulation en largeur d'impulsion. Sur le schéma de la figure 2, le régulateur 8 fournit des premiers signaux MC1 de modulation triphasés, un module 11 applique une tension de référence V2 audits signaux MC1 par des opérateurs 12, et un ou deux modules 13 fournissent un signal haute fréquence destiné à être modulé par des signaux de modulation MC2 modifiés par des opérateurs 12. Des opérateurs 14 combinent les signaux de modulation MC2 avec des signaux haute fréquence F1 de préférence triangulaire pour fournir des signaux de commande CVP et CVN des bras d'onduleur 20, 21, 22 au format de modulation de largeur d'impulsion et fonctionnant sur trois niveaux de tension. Les commandes des bras étant de préférence binaires en saturé-bloqué, des circuits de conditionnement 16 mettent en forme les signaux de commande. Le signal V2 de référence est généralement représentatif d'une tension continue, par exemple de la moitié de la tension VDC des lignes L1 et L2 ou de la tension intermédiaire.

Un dispositif de commande d'un convertisseur décrit dans un brevet US6842354 comporte une régulation très lente par décalage de tension.

Les dispositifs de contrôle connus contrôlent la tension de point commun des condensateurs de manière lente. Ce type de contrôle implique des condensateurs de très fortes valeurs pour garantir une variation de tension de la tension intermédiaire acceptable. Avec ce type de contrôle les tensions positives et négatives sont aussi surdimensionnées pour compenser des pertes dans des semi-conducteurs de puissance. De plus le type de contrôle des dispositifs connu est incompatible avec l'usage d'une surmodulation permettant une réduction des pertes.

## EXPOSE DE L'INVENTION

L'invention a pour but un dispositif et un procédé de commande d'un convertisseur permettant une régulation améliorée de la tension intermédiaire et une commande performante des bras du convertisseur, ainsi qu'un convertisseur, comportant un tel dispositif.

Dans un dispositif de commande selon l'invention les moyens de contrôle comportent :

- des moyens de régulation associés à des moyens de détermination d'une composante générale de commande,
- des entrées de signaux de tension pour fournir audits moyens de régulation des signaux représentatifs de tensions entre lesdites lignes de tension positive, négative et intermédiaire, ou des variations de la tension intermédiaire, et
- des entrées de signaux de courants pour fournir audits moyens de régulation des signaux de courants représentatifs de courants de sortie des bras du convertisseur,
  lesdits moyens de détermination de la composante générale de commande déterminant la composante générale de commande en fonction desdits signaux de modulation, desdits signaux représentatifs de tension et desdits signaux représentatifs de courants pour participer dynamiquement à la régulation de la tension intermédiaire.

De préférence, lesdits moyens de régulation comportent un premier module de régulation traitant d'une première combinaison d'un produit de signaux de modulation et de courants de sortie, la composante générale de commande étant dépendante d'un signal représentatif de ladite première combinaison et d'un signal représentatif d'une variation de tension intermédiaire.

Avantageusement, lesdits moyens de régulation comportent un second module de régulation traitant d'une seconde combinaison d'un produit de signaux de modulation au carré et de courants de sortie, la composante générale de commande étant dépendante d'un signal représentatif d'un quotient entre une différence de ladite seconde combinaison par rapport à un signal représentatif d'une variation de la tension intermédiaire et ladite première combinaison.

Avantageusement, lesdits moyens de régulation comportent un module de détection de signe d'un résultat de ladite première combinaison, la composante générale de commande étant dépendante d'un signal représentatif d'un produit entre un signal représentatif dudit signe et d'un signal représentatif d'une variation de la tension intermédiaire.

Dans un mode de réalisation préférentiel, les moyens de détermination de la composante générale de commande comportent des moyens de contrôle d'une surmodulation pour fournir une composante générale de commande comportant des signaux de régulation de tension de point milieu et des signaux de contrôle de surmodulation.

De préférence, lesdits moyens de contrôle d'une surmodulation comportent des moyens de contrôle de la priorité de signaux, les signaux de régulation étant prioritaires sur les signaux de surmodulation.

De préférence, lesdits moyens de contrôle d'une surmodulation positionnent pendant la surmodulation les semi-conducteurs des bras pour fournir une tension selon une première valeur de tension correspondant à la tension de la ligne positive, une seconde valeur de tension correspondant à la tension de la ligne négative, ou une troisième valeur de tension correspondant à la tension de point milieu.

Avantageusement, lesdits moyens de contrôle d'une surmodulation positionnent pendant la surmodulation les semi-conducteurs des bras en fonction d'un signal de modulation le plus proche de signaux de représentatifs de ladite première tension positive, de ladite tension négative, ou de ladite tension intermédiaire.

Avantageusement, lesdits moyens de contrôle d'une surmodulation positionnent pendant la surmodulation les semi-conducteurs des bras en fonction d'un signal de modulation modifié par un signal de régulation, ledit signal de modulation modifié étant le plus proche de signaux de représentatifs de ladite première tension positive, de ladite seconde tension négative, ou de ladite tension intermédiaire.

De préférence, les moyens de contrôle d'une surmodulation comportent des moyens de contrôle de risques de saturation des signaux de modulation.

Convertisseur électrique selon l'invention comportant :

- un dispositif de commande ayant des moyens de contrôle de la conduction de bras de semi-conducteurs de puissance,

- une alimentation continue comportant une première ligne de tension positive, une seconde ligne de tension négative, et une troisième ligne de tension intermédiaire reliée à un point commun de condensateurs de filtrage connectés à la dite première ligne et à ladite seconde ligne,
- des moyens de conversion ayant au moins trois bras connectés entre lesdites lignes de tensions positive, négative et intermédiaire et des sorties pour fournir au moins une tension de sortie,
- des moyens de contrôle contrôlant la conduction desdits bras des moyens de conversion en fonction de signaux de modulation comportant des signaux de composante générale de commande,

comporte au moins un dispositif de commande tel que défini ci-dessus et des moyens de mesure des courants disposés sur des lignes de conducteurs de sorties et connectés audit dispositif de commande pour fournir des signaux représentatifs de courants à des moyens de détermination de la composante générale de commande et à des moyens de régulation pour être utilisés dans la détermination de la composante générale de commande régulant la tension intermédiaire.

Un procédé de commande d'un convertisseur d'énergie électrique comportant :

- une alimentation continue comportant une première ligne de tension positive, une seconde ligne de tension négative, et une troisième ligne de tension intermédiaire reliée à un point commun de condensateurs de filtrage connectés à la dite première ligne et à ladite seconde ligne,
- des moyens de conversion ayant au moins trois bras connectés entre lesdites lignes de tensions positive, négative et intermédiaire et des sorties pour fournir au moins une tension de sortie,
- des moyens de contrôle contrôlant la conduction desdits bras des moyens de conversion, selon l'invention comporte :

- la détermination d'une composante générale de commande en fonction de signaux de modulation, de signaux représentatifs de tensions ou de variation de tension de la ligne intermédiaire et/ou des lignes de tensions positive et négative, et de signaux représentatifs de courants dans des conducteurs de sortie, et
- la régulation de la variation de tension de la ligne intermédiaire à travers la composante générale de commande.

De préférence, la composante générale de commande est déterminée aussi en fonction de traitement de surmodulation.

De préférence, la composante générale de commande est déterminée avec une priorité à la régulation de la tension intermédiaire par rapport à la surmodulation.

Avantageusement, le traitement de la surmodulation est à trois niveaux et applique une sélection d'un signal de modulation le plus proche par rapport à des signaux représentatifs des tensions positive négative ou intermédiaire.

**BREVE DESCRIPTION DES DESSINS**

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 représente un schéma d'un convertisseur de type connu ;
- la figure 2 représente un schéma bloc d'un circuit de commande d'un convertisseur de type connu ;
- la figure 3 représente un schéma d'un dispositif de commande selon un mode de réalisation de l'invention ;
- les figures 4 à 7 représentent des schémas de modélisation pour un dispositif selon un mode de réalisation de l'invention ;
- les figures 8 et 9 représentent des schémas de modules de régulation de dispositifs de commande selon des premiers modes de réalisation de l'invention ;
- la figure 10 représente un schéma d'un module de régulation d'un dispositif de commande selon un second mode de réalisation de l'invention ;
- la figure 11 représente un schéma d'un module de traitement de saturations d'un dispositif de commande selon un mode de réalisation de l'invention ;
- la figure 12 illustre des signaux de modulation sur lesquels peut s'appliquer une régulation d'un dispositif selon un mode de réalisation de l'invention ;
- la figure 13 illustre des signaux de modulation sur lesquels s'applique une régulation d'un dispositif selon un mode de réalisation de l'invention avec une composante générale de commande ;
- la figure 14 représente un schéma de modules de régulation d'un dispositif de commande selon un mode de réalisation de l'invention avec des traitements de surmodulation ajoutées à la régulation de la tension intermédiaire ;
- la figure 15 représente un schéma d'un module de traitement de limitation et de risque de saturation ;

- la figure 16 illustre des signaux de modulation sur lesquels s'applique une régulation et une surmodulation d'un dispositif selon un mode de réalisation de l'invention avec une composante générale de commande ;
- la figure 17 représente un organigramme d'un procédé selon un mode de réalisation de l'invention.

## DESCRIPTION DETAILLEE DE MODES DE REALISATION PREFERES

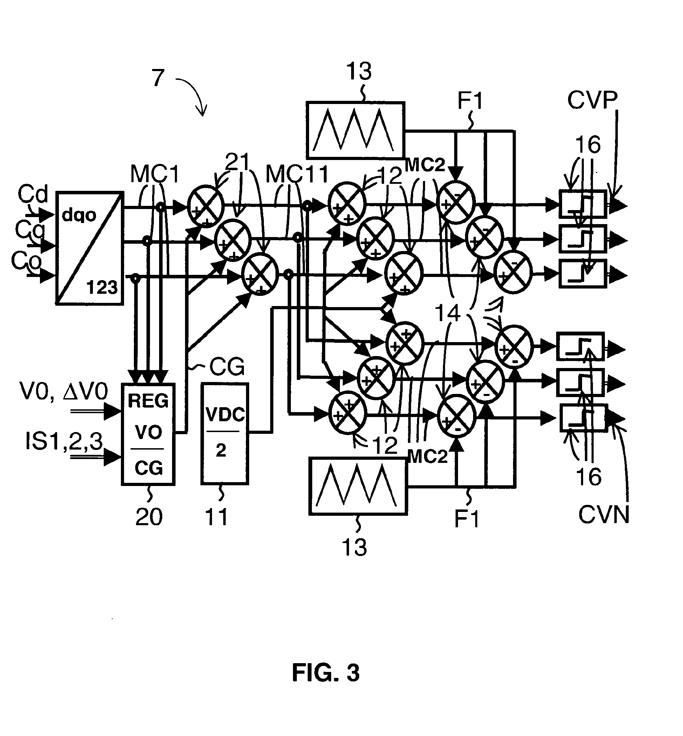

Dans un dispositif selon un mode de réalisation de l'invention, le circuit de contrôle comporte une unité de traitement pour fournir des signaux MC1, MC2 de modulation de signaux de commande desdits bras et un circuit de régulation 20 associé à un module de détermination d'une composante générale de commande CG. le circuit de contrôle comporte des entrées de signaux de tension pour fournir audits circuit de régulation des signaux représentatifs de tensions V0, entre lesdites lignes de tension positive, négative et intermédiaire, ou des variations de la tension intermédiaire ΔV0, et des entrées de signaux de courants pour fournir au circuit de régulation 20 des signaux de courants IS123 représentatifs de courants de sortie des bras du convertisseur.
Le circuit de régulation et le module de détermination de la composante générale de commande déterminent la composante générale de commande CG en fonction desdits signaux de modulation MC1, desdits signaux représentatifs de tension V0 et ΔV0 et desdits signaux représentatifs de courants IS123 pour participer à la régulation de la tension intermédiaire V0.
Un schéma bloc d'un tel dispositif est représenté sur la figure 3. Le circuit 20 de régulation et de détermination de la composante générale CG reçoit les signaux de modulation MC1, les signaux représentatifs de tension V0 ou ΔV0 et les signaux représentatifs de courants IS123. Le circuit 20 fournit la composante générale de commande CG à des opérateurs 21 pour modifier les signaux de modulation MC1. Des signaux de modulation MC11 ainsi modifiés par la composante générale de commande CG sont fournis aux opérateurs 12 pour continuer le traitement des signaux de modulation des bras.
Ainsi, un convertisseur comporte un dispositif de mesure des courants IS123 disposé sur des lignes de conducteurs de sorties et connectés audit circuit de commande pour fournir des signaux représentatifs de courants au module de détermination de la composante générale de commande CG et au circuit de régulation 20 pour être utilisés dans la détermination de la composante générale de commande régulant la tension intermédiaire ΔV0.

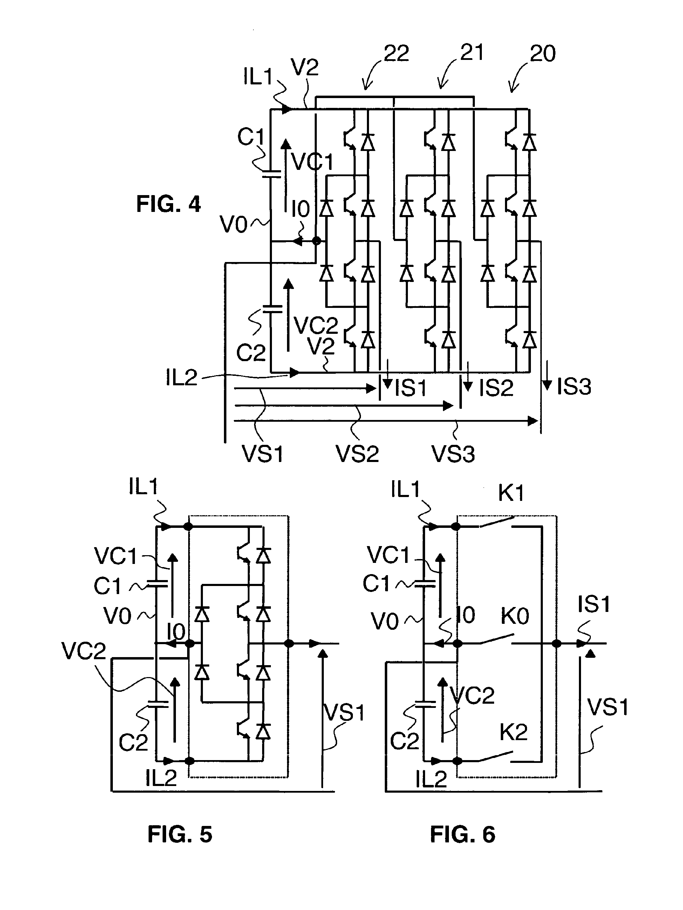

Les figures 4 à 7 représentent des schémas de modélisation du fonctionnement des bras du convertisseur et de la régulation de la variation de tension intermédiaire. Le courant 10 sur le point commun de tension V0 est la somme des courants des deux lignes de tension IL1 et IL2 alimentant les bras 20, 21, 22. Des tensions de sorties VS1, VS2, VS3 sont référencées par rapport au point commun V0. Ses courants de sortie IS1 IS2 et IS3 sont alimentés par les courants IL1 et IL2 dont ils constituent une somme des courants positifs ou négatifs selon les signes des tensions de sortie commandées par des signaux de modulation. Sur la figure 5 une seule cellule d'un bras est représentée pour introduire une modélisation électrique équivalente de la figure 6.
Ainsi, dans un premier exemple de mise en équation (1), le courant dans le point commun 10 peut être exprimé en fonction de grandeur P et E correspondant respectivement à la puissance instantanée en sortie du convertisseur et à la tension de ligne continue en entrée du convertisseur. Cette valeur de courant est dépendante d'une première somme de produit comportant des signaux de modulation MC1, des valeurs de courant de sortie et contrôler par les signes de signaux de modulation et d'une seconde somme comportant un produit d'une composante générale de commande CG et d'une somme de courants de sortie contrôlés par le signe des signaux de modulation.

$$i_0 = \frac{p}{E} + 2\sum_{k=1}^{3}(MC1_k\, Sng_k\, i_k) + CG\ 2\sum_{k=1}^{3}(Sng_k\, i_k)$$

$$avec \quad Sng_k = 1 \ pour \ MC1_k > 0 \tag{1}$$

$$Sng_k = 0 \ pour \ MC1_k < 0$$

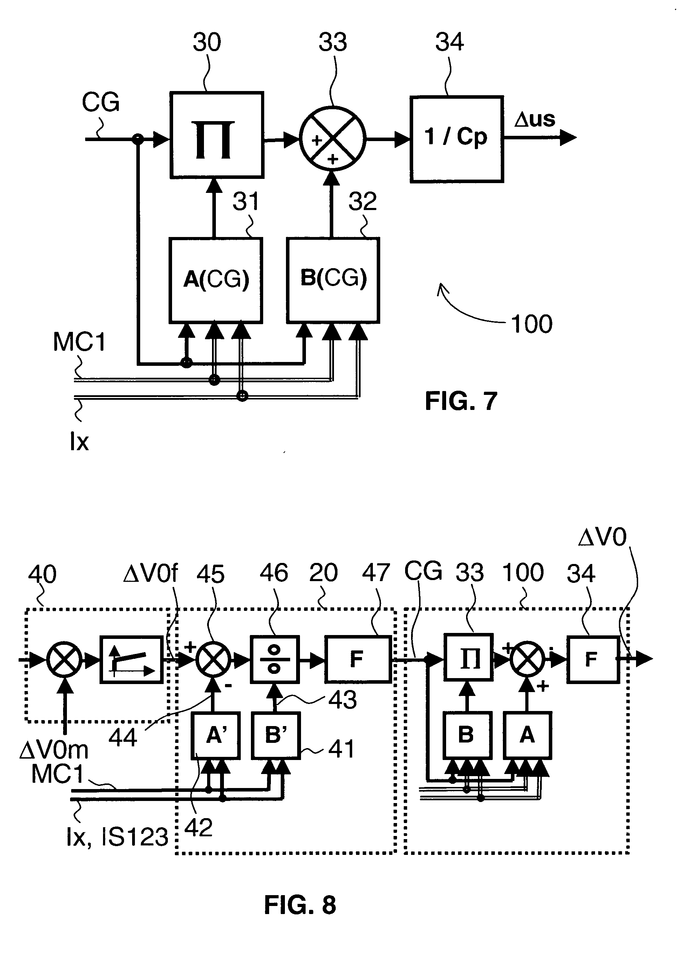

Cette modélisation peut être utilisée avec des fonctions réciproques pour le contrôle de la tension V0 puisque la réduction de la variation du courant dans I0 implique aussi une réduction de la variation de la tension ΔV0. Une telle modélisation est représentée par un circuit 100 sur la figure 7 avec un module produit 30 recevant la composante CG et le résultat d'une première combinaison 31 dépendante de la composante CG des signaux de modulation et des courants de sortie IS 123 correspondant à Ix dans l'équation. Une seconde combinaison 32 reçoit la composante CG des signaux de modulation et des courants de sortie IS123. Le résultat du module produit 30 et le résultat de la seconde combinaison sont appliqués à un opérateur de somme 30 puis à un filtre 34. Cette modélisation montre que le système est non causal et récursif. Un correcteur défini par rapport à ce modèle peut présenter un risque d'instabilité dans un mode fonctionnement dynamique.

Dans un mode de réalisation préférentiel de l'invention une autre modélisation 101 approchée permet une bonne stabilité en mode de fonctionnement dynamique. Cette modélisation peut être représentée par une équation comme ci-dessous.

$$i_0 = \left| MC1_1 + CG \right| i_1 + \left| MC1_2 + CG \right| i_2 + ... + \left| MC1_x + CG \right| i_x$$

$$\approx (MC1_1 + CG)^2 i_1 + (MC1_2 + CG)^2 i_2 + ... + (MC1_x + CG)^2 i_x$$

$$i_0 \approx \sum_{k=1}^{3} (MC1_k^2 i_k) + CG * 2 \sum_{k=1}^{3} (MC1_k i_k) \qquad (2)$$

$$i_0 \approx A' + B' MC1$$

Cette modélisation est basée sur des sommes de produit de valeurs absolues. Elle conduit notamment à rendre le système initial causal et non récursif. Un correcteur défini avec cette approximation du système initial permet de supporter correctement un contrôle dynamique de la régulation de la tension intermédiaire V0 du point commun.

Par exemple, dans un fonctionnement dynamique les valeurs de courant sont représentées notamment par des valeurs instantanées, quasi-instantanées ou échantillonnées i1, i2, ix ou ik des courants, des signes des courants ou de leurs valeurs absolues.

La figure 8 représente un schéma bloc d'un circuit de régulation 20 d'un dispositif de commande selon un premier mode de réalisation de l'invention. Sur le schéma un circuit de correction ou d'équilibrage 40 conditionne un signal de variation de tension intermédiaire mesuré ΔV0m pour fournir un tel signal ΔV0f. Le signal ΔV0f ainsi que les signaux MC1 et modulation et les signaux de courant Ix ou IS123 sont fournis à un circuit de régulation 20.

Le circuit de régulation 20 comporte un premier module de régulation 41 traitant une première combinaison d'un produit de signaux de modulation MC1 et de courants de sortie IS123, la composante générale de commande étant dépendante d'un signal 43 représentatif de ladite première combinaison et d'un signal représentatif d'une variation de tension intermédiaire ΔV0, ΔV0m ou ΔV0f.

De préférence, le circuit de régulation 20 comporte un second module de régulation 42 traitant une seconde combinaison d'un produit de signaux de modulation MC1 au carré et de courants de sortie IS123, et fournissant un signal 44 représentatif dudit traitement. Un opérateur 45 opère la différence entre le signal de variation de tension ΔV0, ΔV0m ou ΔV0f et le signal 44, et un opérateur 46 opère un quotient entre le résultat de l'opérateur 45 et le signal 43. Ainsi, la composante générale de commande CG est alors dépendante d'un signal représentatif d'un quotient entre une différence de ladite seconde combinaison par rapport à un signal représentatif d'une variation de la tension intermédiaire et ladite première combinaison. Un module de filtrage améliore le fonctionnement du système en filtrant le signal de sortie de la composante générale de commande.

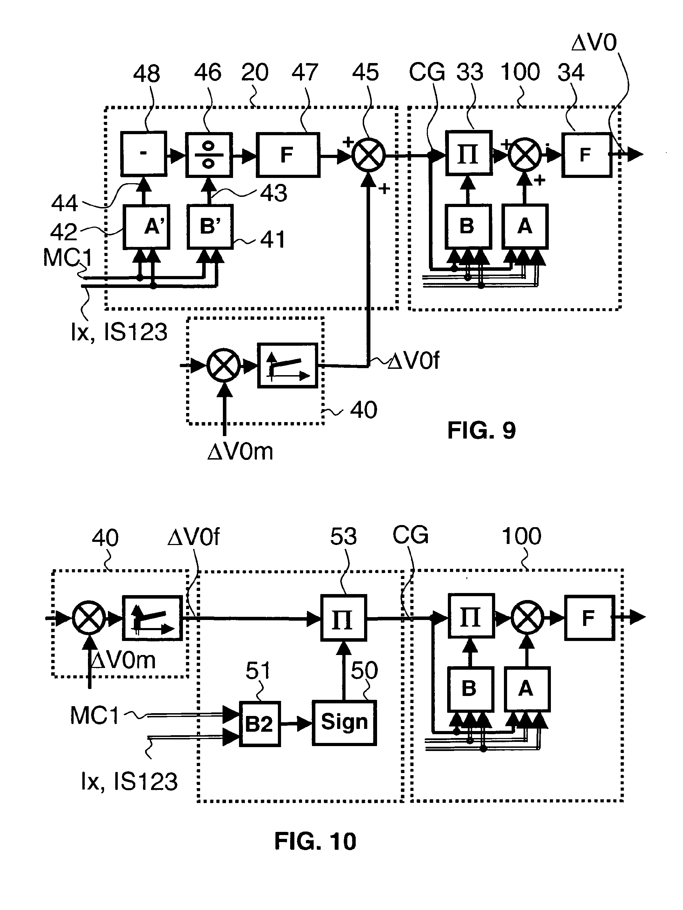

Dans le mode de réalisation de la figure 9, le circuit 40 fournit un signal conditionné ΔV0m ou ΔV0f à un opérateur 45 disposé en sortie du circuit 20 de régulation et connecté au circuit 100. Le circuit 20 modifié comporte un opérateur 48 qui inverse le signal fourni par l'opérateur 42 avant de l'appliquer à l'opérateur 46. L'opérateur 45 fournit une composante générale de commande CG en fonction d'un signal représentatif d'un signal de sortie du module 46 et du signal de sortie du circuit 40. Le circuit de correction ou d'équilibrage 40 peut aussi être intégré au circuit de régulation 20.

La figure 10 représente une variante d'un module de régulation d'un dispositif de commande selon un second mode de réalisation de l'invention. Le circuit de régulation 20 comporte un module 50 de détection de signe d'un résultat module de régulation 51 opérant une combinaison d'un produit de signaux de modulation MC1 et de courants de sortie IS123. Un opérateur 53 opérant le produit entre le signal de variation de tension ΔV0, ΔV0m ou ΔV0f et un signal fourni par le module 50. La composante générale de commande est dépendante d'un signal représentatif d'un produit entre un signal représentatif dudit signe et d'un signal représentatif d'une variation de la tension intermédiaire.

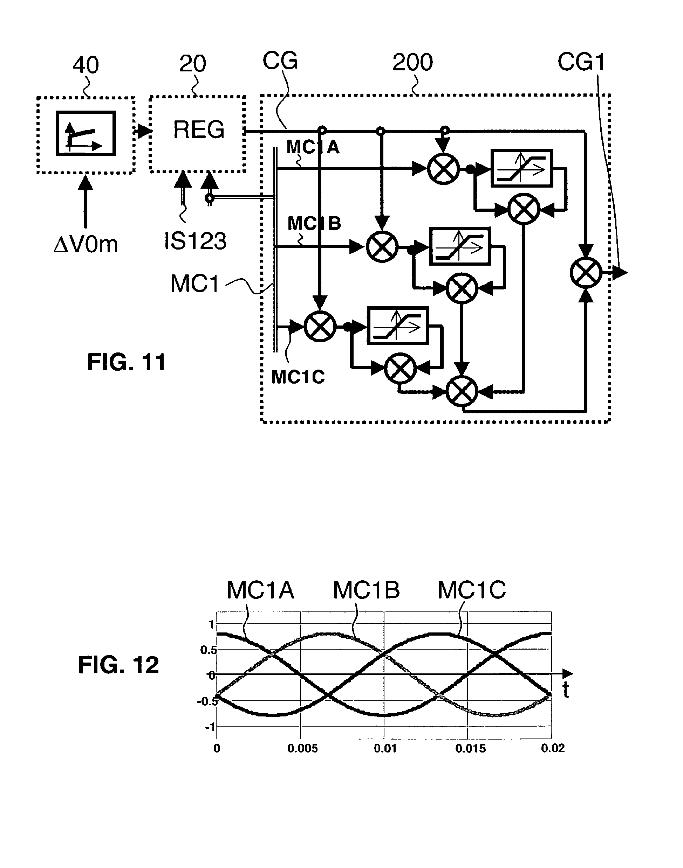

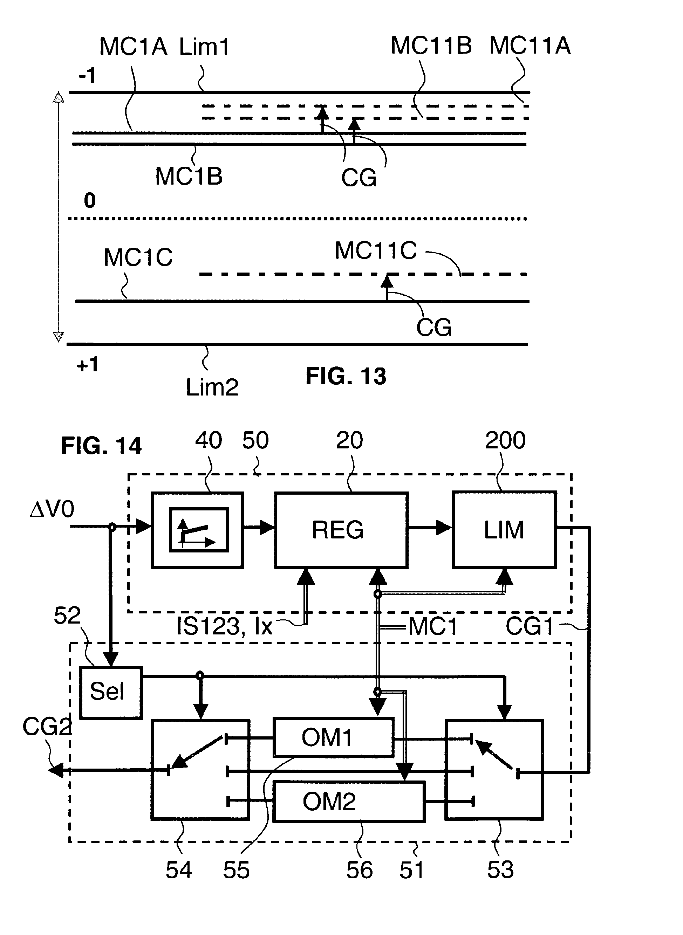

Sur le schéma de la figure 11 un dispositif selon un mode réalisation de l'invention comporte un circuit 200 de contrôle de risque de dépassement de saturation. Ce circuit comporte des modules de limitation 201, 202 et 203 pour contrôler pour chaque signal de modulation respectivement MC1A, MC1B, MC1C le risque de dépassement et imposer une limitation en cas de dépassement. La figure 12 montre des exemples de signaux de modulation MC1 par exemple les signaux MC1A, MC1B, MC1C. Sur la figure 13 une composante générale de commande CG pour la régulation est appliquée à tous les signaux MC1A, MC1B, MC1C pour fournir des signaux MC11A, MC11B, MC11C représentant des signaux MC11 de la figure 3.

Dans un mode particulier de réalisation, la composante générale de commande CG destinée à la régulation de la variation de la tension intermédiaire comporte aussi des signaux de surmodulation pour diminuer les pertes en puissance et diminuer la tension des lignes de tension V1 et V2, la surmodulation consistant à forcer la conduction de semi-conducteurs de puissance pendant une durée déterminée.

Dans ce cas, la détermination de la composante générale de commande CG utilise un circuit de contrôle d'une surmodulation OM pour fournir une composante générale de commande comportant des signaux de régulation de tension de point milieu V0, $\Delta$V0 et des signaux de contrôle de surmodulation OM.

Sur la figure 14, un premier bloc 50 régule la variation de tension intermédiaire $\Delta$V0 de point commun en fournissant un premier signal CG1 de composante générale de commande puis un second Bloc 51 ajoute une surmodulation OM au signal de composante générale pour fournir un signal de composante générale de commande CG2 comportant la régulation de la variation de tension intermédiaire $\Delta$V0 et de la surmodulation OM.

Le circuit de contrôle, notamment dans le bloc 51 comporte un module 52 de contrôle de la priorité de signaux, les signaux de régulation étant prioritaires sur les signaux de surmodulation. Par exemple en cas d'incompatibilité entre la régulation et la surmodulation la priorité est donnée à la régulation.

Le bloc 51 de contrôle d'une surmodulation positionne pendant la surmodulation les semi-conducteurs des bras pour fournir une tension selon une première valeur de tension correspondant à la tension de la ligne positive V1, une seconde valeur de tension correspondant à la tension de la ligne négative V2, ou une troisième valeur de tension correspondant à la tension de point milieu V0.

De préférence, ledit bloc 51 de contrôle d'une surmodulation positionne pendant la surmodulation les semi-conducteurs des bras en fonction d'un signal de modulation le plus proche de signaux de représentatifs de ladite première tension positive V1, de ladite tension négative V2, ou de ladite tension intermédiaire V0.

Avantageusement, ledit bloc 51 de contrôle d'une surmodulation positionne pendant la surmodulation les semi-conducteurs des bras en fonction d'un signal de modulation modifié par un signal de régulation, ledit signal de modulation modifié étant le plus proche de signaux de représentatifs de ladite première tension positive V1, de ladite seconde tension négative V2, ou de ladite tension intermédiaire V0.

Par exemple, des modulent 53 et 54 de sélection commandés par le module 52 sélectionnent des valeurs de surmodulation OM1 ou OM2 appliquées à la composante générale de commande par des modules 55 ou 56 ou pas de surmodulation.

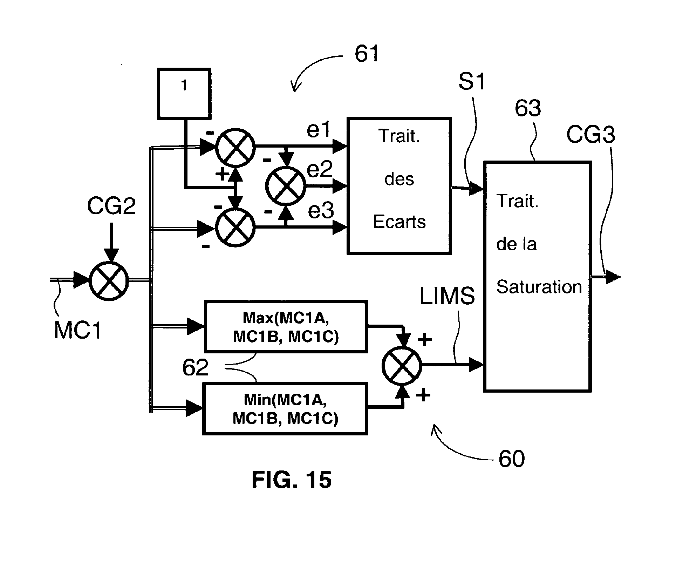

Ledit bloc 51 de contrôle d'une surmodulation comporte un module de contrôle de risques de saturation des signaux de modulation. La figure 15 montre un circuit de traitement 60 de limitation de saturation. Des premiers modules 61 déterminent des écarts entre la composante générale de commande CG2 et des consignes. Des modules 62 déterminent des valeurs limites de saturation LIMS en fonction des signaux de modulation MC1. Puis un module 63 traite les risques de saturation en fonction de signaux de limitation.

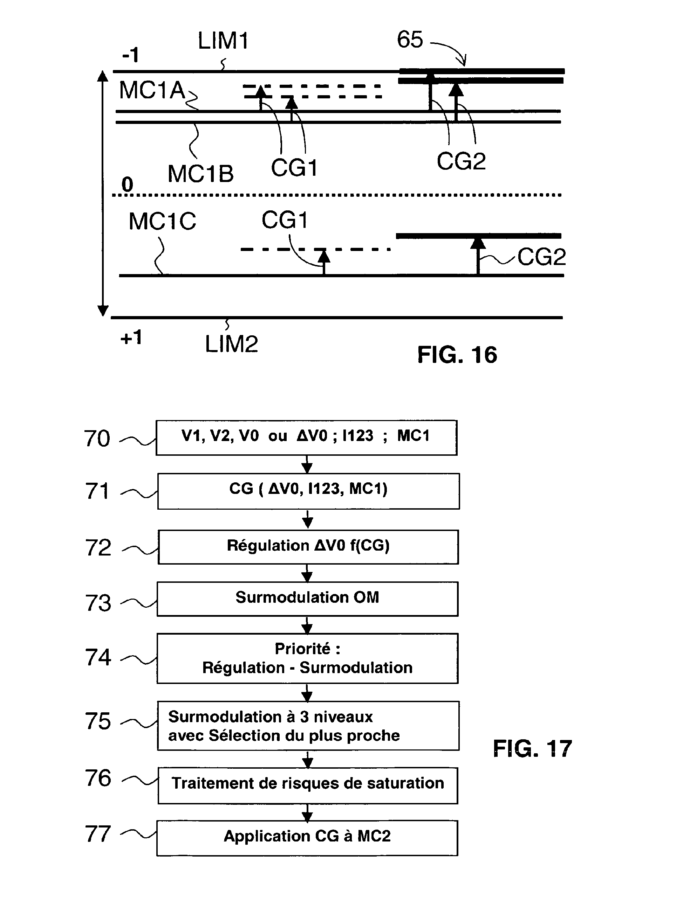

Sur la figure 16 des signaux de modulation MC1A, MC1B, MC1C sont positionnés, avec des signaux de composante générale de commande CG1 dépendante de la régulation de variation de tension de la tension intermédiaire et avec des signaux de composante générale de commande CG2 dépendante de ladite régulation et de la surmodulation. Sur cette figure la surmodulation impose la valeur maximale de la valeur positive au signal de modulation MC1A au point 65.

La figure 17 représente un organigramme d'un procédé selon un mode de réalisation de l'invention.

Le procédé comporte une étape 70 de mesure ou acquisition de signaux. Puis, à une étape 71, la détermination d'une composante générale de commande CG est réalisée en fonction de signaux de modulation MC1, de signaux représentatifs de tensions ou de variation de tension $\Delta$V0, de la ligne intermédiaire V0 et/ou des lignes de tensions positive V1 et négative V2, et de signaux représentatifs de courants dans des conducteurs de sortie IS123. A une étape 72, la régulation de la variation de tension de la ligne intermédiaire est réalisée à travers la composante générale de commande CG.

Une étape 73, permet le traitement de la surmodulation OM à appliquer à la composante générale de commande. Ainsi, la composante générale de commande est déterminée aussi en fonction du traitement de surmodulation. A une étape 74, la composante générale de commande est déterminée avec une priorité à la régulation de la tension intermédiaire par rapport à la surmodulation.

De préférence, à une étape 75, le traitement de la composante générale de commande est à trois niveaux et applique une sélection d'un signal de modulation le plus proche par rapport à des signaux représentatifs des tensions positive négative ou intermédiaire. Une étape 76 traite des risques de saturation et une étape 77 applique la composante générale de commande à des signaux de modulation.

Des dispositifs de conversion selon des modes de réalisation peuvent être notamment des onduleurs, alimentations sans interruption, des variateurs de vitesse, des convertisseurs d'énergie unidirectionnels ou bidirectionnels, ou des convertisseurs de fréquence.

L'invention s'applique en particulier aux convertisseurs triphasés à trois niveaux de tension continue à trois bras ou à quatre bras, mais d'autres convertisseurs ayant un nombre différent de bras et/ou de phases peuvent être concernés.

Les semi-conducteurs de ces convertisseurs sont avantageusement des transistors à grille isolée dits IGBT mais d'autres types de semi-conducteurs peuvent être utilisés. Les bras peuvent comporter plusieurs semi-conducteurs connectés en série et/ou en parallèle en fonction des tensions, des courants ou des puissances électriques utilisées. Par exemple, les tensions d'entrée ou de sortie peuvent être de quelques dizaines de volts à mille volts pour des applications en réseaux basse tension ou avoir des tensions de plusieurs milliers de volts notamment en application moyenne tension. Les courants d'entrée ou de sortie peuvent être de quelques ampères à plus de mille ampères.

## Revendications

1. Dispositif de commande d'un convertisseur d'énergie électrique comportant des moyens de contrôle (6) de la conduction de bras (20, 21, 22) de semi-conducteurs de puissance,
ledit convertisseur d'énergie électrique comportant :

   - une alimentation continue comportant une première ligne (L1) de tension positive (V1), une seconde ligne (L2) de tension négative (V2), et une troisième ligne (L0) de tension intermédiaire (V0) reliée à un point commun de condensateurs (C1, C2) de filtrage connectés à la dite première ligne et à ladite seconde ligne,
   - des moyens (2) de conversion ayant au moins trois bras (20, 21, 22) connectés entre lesdites lignes (L1, L2, L0) de tension positive, négative ou intermédiaire et des sorties pour fournir au moins une tension de sortie,
   - des moyens (6) de contrôle contrôlant la conduction desdits bras (20, 21, 22) des moyens de conversion (2), lesdits moyens de contrôle comportant des moyens (7) de traitement pour fournir des signaux (MC1, MC1A, MC1B, MC1C, MC2) de modulation de signaux de commande desdits bras,

   **caractérisé en ce que** les moyens de contrôle comportent :

   - des moyens de régulation (20) associés à des moyens de détermination d'une composante générale de commande (CG),
   - des entrées de signaux de tension pour fournir audits moyens de régulation des signaux représentatifs de tensions entre lesdites lignes de tension positive, négative et intermédiaire, ou des variations de la tension intermédiaire (V1, V2, v0, ΔV0), et
   - des entrées de signaux de courants pour fournir audits moyens de régulation des signaux de courants représentatifs de courants de sortie (IS123, Ix) des bras du convertisseur, lesdits moyens de détermination de la composante générale de commande déterminant la composante générale de commande (CG, CG1, CG2, CG3) en fonction desdits signaux de modulation, desdits signaux représentatifs de tension et desdits signaux représentatifs de courants pour participer dynamiquement à la régulation de la tension intermédiaire (ΔV0).

2. Dispositif selon la revendication 1 **caractérisé en ce que** lesdits moyens de régulation comportent un premier module (41, 51) de régulation traitant d'une première combinaison d'un produit de signaux de modulation (MC1) et de courants de sortie (Ix, IS123), la composante générale (CG) de commande étant dépendante d'un signal représentatif de ladite première combinaison et d'un signal représentatif d'une variation de tension intermédiaire (ΔV0, ΔV0m, ΔV0f).

3. Dispositif selon la revendication 2 **caractérisé en ce que** lesdits moyens de régulation comportent un second module (42) de régulation traitant d'une seconde combinaison d'un produit de signaux de (MC1) au carré et de courants de sortie (Ix, IS123), la composante générale de commande (CG) étant dépendante d'un signal représentatif d'un quotient entre une différence de ladite seconde combinaison par rapport à 'un signal représentatif d'une variation de la tension intermédiaire (ΔV0, ΔV0m, ΔV0f) et ladite première combinaison.

4. Dispositif selon la revendication 2 **caractérisé en ce que** lesdits moyens de régulation comportent un module (50) de détection de signe d'un résultat de ladite première combinaison, la composante générale de commande (CG) étant dépendante d'un signal représentatif d'un produit entre un signal représentatif dudit signe et d'un signal représentatif d'une variation de la tension intermédiaire (ΔV0, ΔV0m, ΔV0f).

**5.** Dispositif selon l'une quelconque des revendications 1 à 4 **caractérisé en ce que** les moyens de détermination de la composante générale de commande (CG) comportent des moyens (51-55) de contrôle d'une surmodulation (OM) pour fournir une composante générale de commande comportant des signaux de régulation de tension de point milieu et des signaux de contrôle de surmodulation.

**6.** Dispositif selon la revendication 5 **caractérisé en ce que** lesdits moyens de contrôle (51-55) d'une surmodulation comportent des moyens (52) de contrôle de la priorité de signaux, les signaux de régulation étant prioritaires sur les signaux de surmodulation.

**7.** Dispositif selon l'une des revendications 5 ou 6 **caractérisé en ce que** lesdits moyens (51-55) de contrôle d'une surmodulation positionnent pendant la surmodulation les semi-conducteurs des bras pour fournir une tension selon une première valeur de tension correspondant à la tension (V1) de la ligne positive, une seconde valeur de tension correspondant à la tension (V2) de la ligne négative, ou une troisième valeur de tension correspondant à la tension (V0) de point milieu.

**8.** Dispositif selon la revendication 7 **caractérisé en ce que** lesdits moyens de contrôle d'une surmodulation positionnent pendant la surmodulation les semi-conducteurs des bras en fonction d'un signal de modulation (MC1A, MC1B, MC1C) le plus proche de signaux de représentatifs de ladite première tension positive (V1), de ladite tension négative (V2), ou de ladite tension intermédiaire (V0).

**9.** Dispositif selon la revendication 8 **caractérisé en ce que** lesdits moyens de contrôle d'une surmodulation positionnent pendant la surmodulation les semi-conducteurs des bras en fonction d'un signal de modulation modifié par un signal de régulation, ledit signal de modulation modifié étant le plus proche de signaux de représentatifs de ladite première tension positive (V1), de ladite seconde tension négative (V2), ou de ladite tension intermédiaire (V0).

**10.** Dispositif selon l'une des revendications 8 ou 9 **caractérisé en ce que** les moyens de contrôle d'une surmodulation comportent des moyens (61) de contrôle de risques de saturation des signaux de modulation (MC1).

**11.** Convertisseur électrique comportant :

- un dispositif de commande ayant des moyens de contrôle (6) de la conduction de bras (20, 21, 22) de semi-conducteurs de puissance,
- une alimentation continue comportant une première ligne (L1) de tension positive (V1), une seconde ligne (L2) de tension négative (V2), et une troisième ligne (L0) de tension intermédiaire (V0) reliée à un point commun de condensateurs (C1, C2) de filtrage connectés à la dite première ligne et à ladite seconde ligne,
- des moyens (2) de conversion ayant au moins trois bras (20, 21, 22) connectés entre lesdites lignes (L1, L2, L0) de tensions positive, négative et intermédiaire et des sorties pour fournir au moins une tension de sortie,
- des moyens (6) de contrôle contrôlant la conduction desdits bras (20, 21, 20) des moyens de conversion (2) en fonction de signaux de modulation comportant des signaux de composante générale de commande,

**caractérisé en ce qu'**il comporte au moins un dispositif de commande selon l'une des revendications 1 à 10 et des moyens (7) de mesure des courants disposés sur des lignes de conducteurs de sorties et connectés audit dispositif de commande pour fournir des signaux représentatifs de courants (IS123, Ix) à des moyens de détermination de la composante générale de commande (CG) et à des moyens de régulation (20) pour être utilisés dans la détermination de la composante générale de commande régulant la tension intermédiaire (ΔV0).

**12.** Procédé de commande d'un convertisseur d'énergie électrique comportant :

- une alimentation continue comportant une première ligne de tension positive (V1), une seconde ligne de tension négative (V2), et une troisième ligne de tension intermédiaire (V0) reliée à un point commun de condensateurs (C1, C2) de filtrage connectés à la dite première ligne et à ladite seconde ligne,
- des moyens (2) de conversion ayant au moins trois bras (20, 20, 22) connectés entre lesdites lignes (L1, L2, L0) de tensions positive, négative et intermédiaire et des sorties pour fournir au moins une tension de sortie,
- des moyens (6) de contrôle contrôlant la conduction desdits bras des moyens de conversion,

**caractérisé en ce qu'**il comporte :

- la détermination (71) d'une composante générale de commande en fonction de signaux de modulation, de signaux représentatifs de tensions ou de variation de tension de la ligne intermédiaire et/ou des lignes de tensions positive et négative, et de signaux représentatifs de courants dans des conducteurs de sortie, et
- la régulation (72) de la variation de tension de la ligne intermédiaire a travers la composante générale de commande.

13. Procédé de commande selon la revendication 12 **caractérisé en ce que** la composante générale de commande est déterminée (73) aussi en fonction de traitement de surmodulation.

14. Procédé de commande selon la revendication 13 **caractérisé en ce que** la composante générale de commande est déterminée (74) avec une priorité à la régulation de la tension intermédiaire par rapport à la surmodulation.

15. Procédé de commande selon l'une des revendications 13 ou 14 **caractérisé en ce que** le traitement (75) de la surmodulation est à trois niveaux et applique une sélection d'un signal de modulation le plus proche par rapport à des signaux représentatifs des tensions positive négative ou intermédiaire.

FIG. 1  (Art Antérieur)

**FIG. 2  (Art Antérieur)**

**FIG. 3**

FIG. 4

FIG. 5

FIG. 6

FIG. 7

FIG. 8

FIG. 9

FIG. 10

FIG. 11

FIG. 12

FIG. 13

FIG. 14

**FIG. 15**

**FIG. 16**

| | |
|---|---|
| 70 | V1, V2, V0 ou ΔV0 ; I123 ; MC1 |
| 71 | CG ( ΔV0, I123, MC1) |
| 72 | Régulation ΔV0 f(CG) |
| 73 | Surmodulation OM |
| 74 | Priorité :<br>Régulation - Surmodulation |
| 75 | Surmodulation à 3 niveaux<br>avec Sélection du plus proche |
| 76 | Traitement de risques de saturation |
| 77 | Application CG à MC2 |

**FIG. 17**

**Office européen des brevets**

**RAPPORT DE RECHERCHE EUROPEENNE**

Numéro de la demande

EP 06 35 4005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 842 354 B1 (TALLAM RANGARAJAN M ET AL) 11 janvier 2005 (2005-01-11) <br> * colonne 5, ligne 46 - colonne 6, ligne 39; figures 1,22 * <br> * colonne 7, ligne 43 - colonne 8, ligne 51 * <br> ----- | 1-15 | INV. <br> H02M7/48 |
| A | EP 0 571 755 A (HITACHI, LTD) 1 décembre 1993 (1993-12-01) <br> * abrégé; figure 1 * <br> ----- | 1-15 | |
| A | EP 0 642 212 A (HITACHI, LTD) 8 mars 1995 (1995-03-08) <br> * abrégé; figure 1 * <br> ----- | 1-15 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| La Haye | 9 juin 2006 | Gentili, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 696 549 A1**

## ANNEXE AU RAPPORT DE RECHERCHE EUROPEENNE
## RELATIF A LA DEMANDE DE BREVET EUROPEEN NO.

EP 06 35 4005

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-06-2006

| Document brevet cité au rapport de recherche | Date de publication | Membre(s) de la famille de brevet(s) | Date de publication |
|---|---|---|---|
| US 6842354 B1 | 11-01-2005 | AUCUN | |
| EP 0571755 A | 01-12-1993 | AU 3691393 A<br>CN 1077825 A<br>DE 69301061 D1<br>DE 69301061 T2<br>US 5361196 A<br>ZA 9302798 A | 11-11-1993<br>27-10-1993<br>01-02-1996<br>08-08-1996<br>01-11-1994<br>16-11-1993 |
| EP 0642212 A | 08-03-1995 | AU 667014 B2<br>AU 7022994 A<br>CN 1101464 A<br>JP 2888104 B2<br>JP 7075345 A<br>US 5627742 A<br>ZA 9406708 A | 29-02-1996<br>30-03-1995<br>12-04-1995<br>10-05-1999<br>17-03-1995<br>06-05-1997<br>01-03-1996 |

EPO FORM P0460

Pour tout renseignement concernant cette annexe : voir Journal Officiel de l'Office européen des brevets, No.12/82